# FASCICULE DE BREVET EUROPEEN

(11) **EP 0 674 929 B1**
(45) Date de publication et mention de la délivrance du brevet: **03.11.1999**
(21) Numéro de dépôt: 95400625.0
(22) Date de dépôt: 21.03.1995
(51) Int. Cl.: B01D 25/12, B01D 25/28, B01D 25/30

(54) **Filtre-presse à membrane élastique, procédé de filtration utilisant un tel filtre**
Filterpresse mit elastischer Membran und Filtrationsverfahren zum Gebrauch einer solchen Filterpresse
Filter press provided with elastic diaphragm and filtration process using such a filter

(30) Priorité: 01.04.1994 FR 9403885
(43) Date de publication de la demande: 04.10.1995
(73) Titulaire: INTERBREW, 1000 Bruxelles (BE); MEURA S.A., 7500 Tournai (BE); KRONTEC S.A., L-1012 Luxembourg (LU)
(72) Inventeur: Tigel Gil, Rafael, B-1342 Limelette (BE); Biche, Jean, B-7503 Froyennes (BE)
(74) Mandataire: Keib, Gérard

(56) Documents cités:
- WO-A-92/20424
- DE-A- 2 503 674
- DE-C- 132 201
- GB-A- 858 634

## Description

La présente invention concerne un nouveau filtre-presse à membrane élastique. Elle concerne également un procédé de filtration utilisant ledit filtre-presse.

La présente invention se rapporte en particulier à un filtre-presse à membrane élastique, notamment pour la filtration de maisches, constitué d'éléments de filtre comportant chacun un cadre et un plateau de filtration formant une chambre de filtration, chaque élément de filtre étant traversé par un conduit d'alimentation inférieur dont les orifices permettent le passage du liquide à filtrer vers lesdites chambres de filtration.

Les filtres-presses sont bien connus et utilisés largement. Généralement, leur membrane sépare deux chambres, à savoir une chambre de filtration qui reçoit le liquide à filtrer lui-même chargé de matières solides, et une autre chambre à air qui délimite un espace dans lequel de l'air peut être introduit. En exerçant une pression sur l'air, la membrane se déplace en direction de l'organe de filtration, provoquant ainsi la compression de la matière solide contenue dans le liquide à filtrer sous forme d'un "gâteau".

Ces filtres-presses présentent cependant divers inconvénients. Par exemple, à partir du moment où la membrane débute son mouvement en direction de l'organe de filtration, l'arrivée de liquide à filtrer n'est pas interrompue rapidement, ce qui peut provoquer un retour dans le conduit d'alimentation d'une quantité de liquide à filtrer. Il peut s'en suivre un certain encrassement de l'orifice du conduit d'alimentation. Ces phénomènes sont d'autant plus marqués lorsque la fermeture de l'orifice d'entrée est très tardive, ce qui se produit lorsque le conduit d'entrée s'étend tangentiellement ou pratiquement tangentiellement à la membrane.

L'invention a pour but principal d'optimiser la capacité de filtration de tous les éléments de filtre constituant le filtre-presse et cela indépendamment de l'éloignement des éléments de filtre par rapport à l'endroit où les produits à filtrer pénètrent dans le conduit d'alimentation inférieur.

L'invention a également pour but de remédier en grande partie aux inconvénients ci-dessus, notamment ceux liés a l'encrassement de l'orifice du conduit d'alimentation.

Le filtre-presse à membrane élastique, en particulier pour la filtration de maisches, visé par l'invention est constitué d'éléments de filtre comprenant chacun un cadre et un plateau de filtration portant un organe de filtration, le cadre et le plateau de filtration portant entre eux une membrane élastique séparant deux chambres, à savoir une chambre de filtration située entre la membrane et l'organe de filtration et adaptée à recevoir un liquide à filtrer contenant des matériaux solides, et une chambre à air située de l'autre côté de la membrane élastique et dans laquelle on peut introduire de l'air sous pression, un conduit d'entrée de liquide étant ménagé à travers chaque plateau de filtration et débouchant dans la chambre de filtration.

Suivant l'invention, ce filtre-presse est caractérisé en ce que le conduit d'entrée débouche dans la chambre de filtration par un orifice d'entrée ménagé dans un plan faisant un angle α de 30° au maximum avec le plan de la membrane au repos, de telle sorte que la membrane élastique obture l'orifice d'entrée dès que l'on injecte de l'air dans la chambre à air pour déplacer la membrane élastique vers l'organe de filtration correspondant.

Ainsi, le filtre-presse à membrane élastique de l'invention permet la coupure de l'alimentation de la chambre de filtration qui reçoit le liquide à filtrer pratiquement dès que la pression de l'air augmente dans la chambre à air située de l'autre côté de la membrane.

Suivant une version avantageuse de l'invention, l'angle α est compris entre 10° environ et 30° environ.

Selon l'invention, le conduit d'entrée présente un axe géométrique qui forme avec la membrane élastique, à l'état de repos, un angle de 60° au maximum.

Selon une forme de réalisation particulièrement avantageuse de l'invention, le conduit d'entrée ci-dessus débouche face à la membrane élastique en un endroit le plus proche possible de l'endroit du cadre où le rebord de la membrane élastique est retenu entre le plateau de filtration et le cadre de chaque élément de filtre.

De façon connue, le filtre-presse selon la présente invention comporte un conduit d'alimentation inférieur communiquant avec la chambre de filtration de chaque élément de filtre par un conduit correspondant d'entrée de liquide débouchant dans la chambre de filtration par un orifice d'entrée.

Suivant une version préférée de l'invention, ce filtre-presse est caractérisé en ce qu'il comporte un second conduit d'alimentation supérieur communiquant également avec la chambre de filtration de chaque élément de filtre par un conduit ménagé en un endroit situé à l'opposé du conduit d'entrée venant du conduit d'alimentation inférieur, ledit conduit d'alimentation supérieur étant relié au conduit d'alimentation inférieur de manière à être alimenté en liquide à filtrer en aval du conduit d'alimentation inférieur et à contre-courant du conduit d'alimentation inférieur, un conduit reliant entre eux lesdits conduits d'alimentation inférieur et supérieur, le cas échéant avec interposition d'une vanne.

L'invention concerne également un procédé de filtration de maisches dans lequel on fait usage du filtre-presse selon la version préférée de l'invention. Le procédé a pour but d'optimiser les conditions dans lesquelles travaille le filtre selon l'invention.

Le procédé de l'invention comporte les étapes d'introduction en premier lieu du liquide à filtrer par le conduit d'alimentation inférieur jusqu'au remplissage de toutes les chambres de filtration, d'ouverture, le cas échéant, d'une vanne séparant les conduits d'alimentation inférieur et supérieur lorsque toutes les chambres de filtration sont remplies à partir du conduit d'alimentation inférieur, et de poursuite de la filtration en alimentant également les chambres de filtration à partir dudit conduit d'alimentation supérieur.

Par effet de contre-pression statique dans le conduit de liaison entre les conduits d'alimentation supérieur et inférieur lors du remplissage du filtre, le placement et l'utilisation de la vanne séparant les conduits inférieur et supérieur sont facultatifs.

D'autres caractéristiques et avantages de l'invention ressortiront encore de la description plus détaillée qui suit d'un filtre-presse à membrane élastique et d'un procédé de filtration de maisches selon l'invention. Il va de soi que cette description n'est donnée qu'à titre purement illustratif et ne constitue en aucune façon une limitation de la présente invention. Les références numériques qui suivent se rapportent aux figures ci-après dans lesquelles :
- la figure 1 représente une vue latérale schématique d'un mode de réalisation du filtre-presse selon l'invention;
- la figure 2 représente une coupe transversale de deux éléments de filtre à membrane selon l'invention.

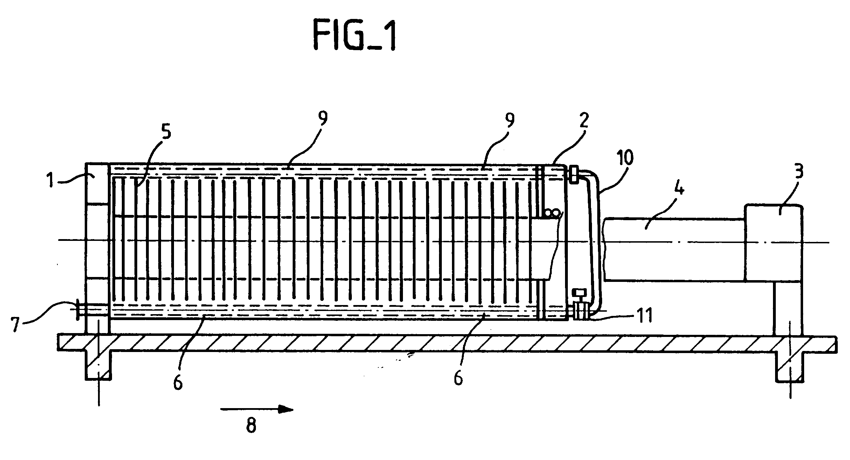

Ainsi qu'il apparaît sur la figure 1, le filtre-presse de l'invention comporte, d'une façon classique, un bâti dont font partie une extrémité fixe 1 et une extrémité mobile 2. Le caisson arrière 3 et l'un des deux éléments longitudinaux 4 le long desquels peuvent être déplacés les éléments de filtre 5 sont représentés sur cette figure 1.

Pour la bonne compréhension de l'invention, il a été estimé suffisant de limiter la représentation schématique du filtre-presse aux éléments apparaissant sur la figure 1. C'est ainsi que les moyens avec lesquels les éléments de filtre 5 sont déplacés le long des éléments longitudinaux 4 ne sont pas représentés.

Jusqu'alors, l'alimentation des chambres de filtration , limitées dans chacun des éléments de filtre 5 à l'espace situé entre la toile de filtration et la membrane souple destinée à comprimer le gâteau est rendue possible par un conduit d'alimentation inférieur représenté par la référence 6. L'alimentation des éléments de filtre 5 se réalise à partir de l'extrémité 7 de ce conduit d'alimentation inférieur 6.

Le liquide à filtrer qui pénètre dans le conduit d'alimentation inférieur 6 circule dans le sens indiqué par la flèche 8. On constate dans les filtres de l'art antérieur que rapidement et à mesure que la filtration progresse, la répartition, dans les chambres de filtration des éléments de filtre, de la fraction solide du liquide à filtrer se présente de façon irrégulière de chambre de filtration à chambre de filtration.

Le filtre de l'invention remédie de façon remarquable à cette répartition irrégulière de la fraction solide du remplissage et conduit à une optimisation des éléments de filtre.

Ceci est en effet obtenu en prolongeant le conduit d'alimentation inférieur 6 par un conduit d'alimentation supérieur 9 relié à ce dernier par une section de conduit vertical 10 ou sensiblement vertical sur laquelle est avantageusement branchée une vanne 11.

Le conduit d'alimentation supérieur 9 remplit donc une fonction identique à celle que remplit le conduit inférieur 6. Le processus de filtration se poursuit en alimentant les chambres de filtration par les conduits supérieur et inférieur, soit par ouverture de la vanne 11, soit par effet de vase communicant lorsque la vanne 11 n'est pas installée. On constate alors une égalisation du remplissage des différentes chambres de filtration tant au point de vue quantitatif qu'au point de vue de la répartition granulométrique, en raison de l'alimentation double à contre-courant à partir des conduits d'alimentation inférieur et supérieur. Les performances du filtre en sont notablement améliorées.

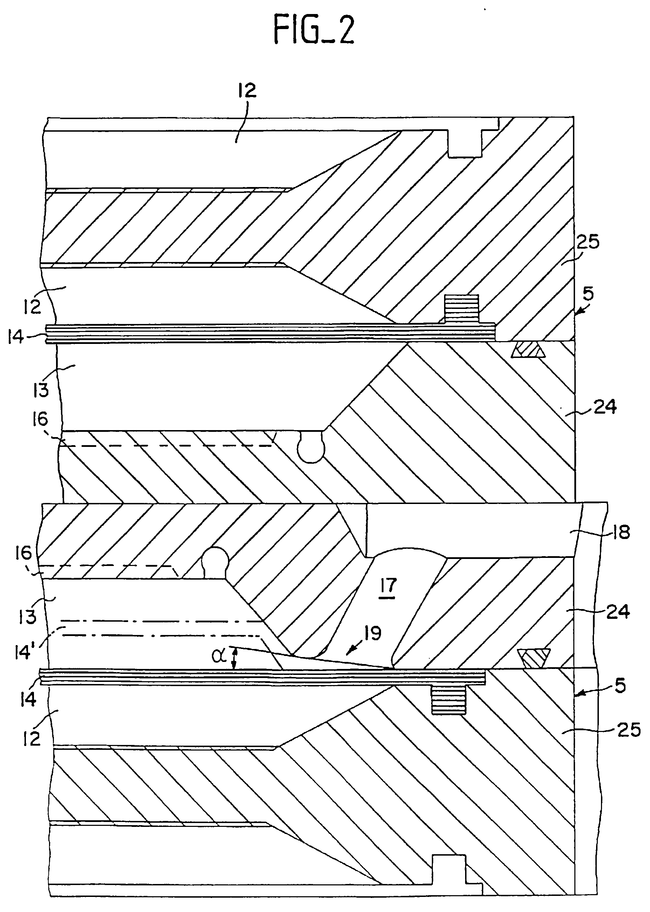

Ainsi qu'il apparaît sur la figure 2, les filtres à membrane élastique représentés en coupe sur la figure 2, dont divers détails d'ordre purement constructif ne sont pas représentés, comportent deux chambres, une chambre à air 12 et une chambre de filtration 13, séparées par une membrane 14. Cette membrane 14 est serrée de manière connue en soi entre le cadre 25 et le plateau de filtration 24 constituant chaque élément de filtre 5.

Les membranes 14 ont été représentées sur la figure 2 à l'état de repos en traits pleins. Les organes de filtration 16 sont représentés en traits interrompus.

Les membranes 14 sont déplacées en direction des organes de filtration 16 sous l'effet de la pression de l'air exercée dans chacune des chambres à air 12. Les conduits d'entrée de l'air utilisés à cet effet ne sont pas représentés sur la figure 2.

On a cependant représenté en points-tirets la position qu'occupe l'une des membranes, en l'occurrence la membrane 14', lorsque celle-ci est déplacée sous l'effet de la pression de l'air, en direction de l'organe de filtration 16 dans le but de comprimer le gâteau.

Il est apparu qu'un bon fonctionnement du filtre est entravé lorsque, la membrane 14 étant déplacée, sous la pression de l'air, dans la chambre de filtration 13, l'arrivée du liquide à filtrer par le conduit d'entrée 17 qui prolonge le conduit d'alimentation 18 n'est pas arrêtée rapidement. On observe alors en effet un reflux par le conduit d'entrée 17 et le conduit d'alimentation 18 du liquide à filtrer.

Dans ces circonstances, un encrassement de cet orifice d'entrée se produit régulièrement et cette situation n'est pas désirée.

Selon l'invention, il est maintenant possible d'arrêter l'entrée du liquide à filtrer dans l'instant qui suit le début du déplacement de la membrane 14 sous l'influence de l'air injecté dans chacune des chambres à air 12. Ce résultat est atteint en disposant le conduit d'entrée 17 et principalement son orifice d'entrée 19 dans un plan tel, par rapport à une membrane 14 au repos, que le conduit d'entrée 17 soit obturé par la membrane 14 dès que son déplacement est provoqué par l'augmentation du volume variable de la chambre à air 12 sous l'influence de l'air injecté dans cette chambre.

Ceci est atteint grâce à l'angle α défini entre le plan passant par l'orifice d'entrée 19 et la membrane 14 à l'état de repos.

Avantageusement, cet angle α se situe entre environ 10° et environ 30° de telle sorte que dès que la membrane 14 vient occuper la position 14' représentée en points-tirets sur la figure 2, l'orifice 19 est rigoureusement obturé et l'augmentation de la pression d'air dans la chambre 12 augmentera progressivement l'obturation parfaite de cet orifice.

En pratique, l'angle défini entre l'axe géométrique de l'orifice d'entrée 19 et la membrane 14 à l'état de repos n'est pas déterminant à lui seul.

Dans un filtre à membrane du type considéré on disposera de préférence le conduit d'entrée 17 et son orifice 19 à proximité de l'endroit du cadre 25 où le rebord de la membrane 14 est retenu entre le plateau de filtration 24 et le cadre 25 de chaque élément de filtre 5.

De la description qui vient d'être donnée du filtre à membrane élastique selon l'invention, on comprendra que l'obturation pratiquement instantanée de l'orifice d'entrée se produit dès que la membrane entame son mouvement en direction de l'organe de filtration sous l'influence de l'augmentation du volume d'air et de sa pression dans chacune des chambres 12.

Il va de soi que l'invention n'est pas limitée à la forme d'exécution préférée qui vient d'être décrite, l'étendue de la protection étant déterminée par les revendications qui suivent.

## Revendications

1. Filtre-presse à membrane élastique, en particulier pour la filtration de maisches, constitué d'éléments de filtre (5) comprenant chacun un cadre (25) et un plateau de filtration (24) portant un organe de filtration (16), le cadre (25) et le plateau de filtration (24) portant entre eux une membrane élastique (14) séparant deux chambres (12, 13), à savoir une chambre de filtration (13) située entre la membrane (14) et l'organe de filtration (16) et adaptée à recevoir un liquide à filtrer contenant des matériaux solides, et une chambre à air (12) située de l'autre côté de la membrane élastique (14) et dans laquelle on peut introduire de l'air sous pression, un conduit (17) d'entrée de liquide étant ménagé à travers chaque plateau de filtration (24) et débouchant dans la chambre de filtration (13), caractérisé en ce que le conduit d'entrée (17) débouche dans la chambre de filtration (13) par un orifice d'entrée (19) ménagé dans un plan faisant un angle α de 30° maximum avec le plan de la membrane (14) au repos, de telle sorte que la membrane élastique (14) obture l'orifice d'entrée (19) dès que l'on injecte de l'air dans la chambre à air (12) pour déplacer la membrane élastique (14) vers l'organe de filtration (16) correspondant.

2. Filtre-presse selon la revendication, caractérisé en ce que l'angle α est compris entre 10° environ et 30° environ.

3. Filtre-presse à membrane élastique selon la revendication 1 ou 2, caractérisé en ce que le conduit d'entrée (17) possède un axe géométrique qui forme avec la membrane élastique (14) à l'état de repos, un angle de 60° au maximum.

4. Filtre-presse selon l'une quelconque des revendications 1 à 3, caractérisé en ce que le conduit d'entrée (17) débouche face à la membrane élastique (14) en un endroit le plus proche possible de l'endroit du cadre (25) où le rebord de la membrane élastique (14) est retenu entre le plateau de filtration (24) et le cadre (25) de chaque élément de filtre (5).

5. Filtre-presse selon l'une quelconque des revendications 1 à 4, comportant un conduit d'alimentation inférieur (6) communiquant avec la chambre de filtration (13) de chaque élément de filtre (5) par un conduit (17) correspondant d'entrée de liquide débouchant dans la chambre de filtration (13) par un orifice d'entrée (19), caractérisé en ce qu'il comporte un second conduit d'alimentation supérieur (9) communiquant également avec la chambre de filtration (13) de chaque élément de filtre (5) par un conduit ménagé en un endroit situé à l'opposé du conduit d'entrée (17) venant du conduit d'alimentation inférieur (6), ledit conduit d'alimentation supérieur (9) étant relié au conduit d'alimentation inférieur (6) de manière à être alimenté en liquide à filtrer en aval du conduit d'alimentation inférieur (6) et à contre-courant du conduit d'alimentation inférieur (6), un conduit (10) reliant entre eux lesdits conduits d'alimentation inférieur et supérieur (6, 9), le cas échéant avec interposition d'une vanne (11).

6. Procédé de filtration de maisches dans lequel on utilise un filtre selon la revendication 5, caractérisé en ce qu'il comprend les étapes :
- d'introduction en premier lieu du liquide à filtrer par le conduit d'alimentation inférieur (6) jusqu'au remplissage de toutes les chambres de filtration (13),
- d'ouverture, le cas échéant, d'une vanne (11) séparant les conduits d'alimentation inférieur (6) et supérieur (9) lorsque toutes les chambres de filtration (13) ont été remplies à partir dudit conduit d'alimentation inférieur (6);
- de poursuite de la filtration en alimentant également les chambres de filtration (13) à partir dudit conduit d'alimentation supérieur (9).

## Claims

1. Filter-press with elastic diaphragm, in particular for mash filtration, consisting of filtration elements (5) each comprising a frame (25) and a filter plate (24) bearing a filtration organ (16), the frame (25) and the filtration plate (24) bearing between them an elastic diaphragm (14) separating two chambers (12, 13), namely a filtration chamber (13) situated between the diaphragm (14) and the filtration organ (16) and suitable to receive a liquid to be filtered containing solid materials, and an air chamber (12) situated on the other side of the elastic diaphragm (14) and into which compressed air can be introduced, a liquid intake conduit (17) being arranged through each filtration plate (24) and opening into the filtration chamber (13), characterised by the fact that the intake conduit (17) opens into the filtration chamber (13) through an intake orifice (19) arranged in a plane forming an angle α of 30° maximum with the plane of the diaphragm (14) at rest, in such a manner that the elastic diaphragm (14) blocks the intake orifice (19) upon injection of air into the air chamber (12) to displace the elastic diaphragm (14) towards the corresponding filtration organ (16).

2. Filter-press as described in the claim, characterised by the fact that the angle α is between approximately 10° and approximately 30°.

3. Filter-press with elastic diaphragm as described in claim 1 or 2, characterised by the fact that the intake conduit (17) has a geometrical axis which forms a maximum angle of 60° with the elastic diaphragm (14) in the rest state.

4. Filter-press as described in any one of claims 1 to 3, characterised by the fact that the intake conduit (17) opens opposite to the elastic diaphragm (14) at a closest possible location to the location of the frame (25) where the edge of the elastic diaphragm (14) is retained between the filtration plate (24) and the frame (25) of each filter element (5).

5. Filter-press as described in any one of claims 1 to 4, including a lower feed conduit (6) communicating with the filtration chamber (13) of each filter element (5) through a through a corresponding liquid intake conduit (17) opening into the filtration chamber (13) through an intake orifice (19), characterised by the fact that it includes a second upper feed conduit (9) also communicating with the filtration chamber (13) of each filter element (5) through a conduit arranged at a location situated opposite the intake conduit (17) coming from the lower feed conduit (6), the said upper feed conduit (9) being connected to the lower feed conduit (6) so as to be supplied with liquid to be filtered downstream of the lower feed conduit (6) and in counter-flow to the lower feed conduit (6), a conduit (10) connecting together the said lower and upper feed conduits (6, 9), where necessary with interposition of a valve (11).

6. Process for mash filtration using the filter as described in claim 5, characterised by the fact that it comprises the steps:
of introduction firstly of the liquid to be filtered through the lower feed conduit (6) until all the filtration chambers (13) are full;
• of opening, where necessary, a valve (11) separating the lower (6) and upper (9) feed conduits when all the filtration chambers (13) have been filled from the said lower feed conduit (6);
• of effecting filtration while also supplying the filtration chambers (13) from the said upper feed conduit (9).

## Patentansprüche

1. Filterpresse mit elastischer Membran, insbesondere für die Filtration von Maischen, welche von Filterelementen (5) gebildet ist, welche jeweils einen Rahmen (25) und eine ein Filtrationsorgan (16) tragende Filtrationsplatte (24) aufweisen, wobei der Rahmen (25) und die Filtrationsplatte (24) zwischen sich eine elastische Membran (14) tragen, welche zwei Kammern (12, 13) trennt, nämlich eine zwischen der Membran (14) und dem Filtrationsorgan (16) angeordnete Filtrationskammer (13), welche dafür eingerichtet ist, eine zu filtrierende Flüssigkeit aufzunehmen, die Feststoffe enthält, und eine auf der anderen Seite der elastischen Membran (14) angeordnete Luftkammer (12), in welche Druckluft eingeleitet werden kann, wobei eine Flüssigkeitseinlaufleitung (17) durch jede Filtrationsplatte (24) hindurchführend angeordnet ist und in die Filtrationskammer (13) mündet, dadurch gekennzeichnet, daß die Einlaufleitung (17) in die Filtrationskammer (13) mündet durch eine Einlaßöffnung (19), welche in einer Ebene angeordnet ist, die mit der Ebene der ruhenden Membran (14) einen Winkel α von maximal 30° bildet, so daß die elastische Membran (14) die Einlaßöffnung (19) verschließt, sobald Luft in die Luftkammer (12) eingespritzt wird, um die elastische Membran (14) zu dem entsprechenden Filtrationsorgan (16) hin zu verschieben.

2. Filterpresse gemäß Anspruch 1, dadurch gekennzeichnet, daß der Winkel α zwischen ungefähr 10° und ungefähr 30° liegt.

3. Filterpresse mit elastischer Membran gemäß Anspruch 1 oder 2, dadurch gekennzeichnet, daß die Einlaufleitung (17) eine geometrische Achse besitzt, welche mit der elastischen Membran (14) im Ruhezustand einen maxiamlen Winkel von 60° bildet.

4. Filterpresse gemäß irgendeinem der Ansprüche 1 bis 3, dadurch gekennzeichnet, daß die Einlaufleitung (17) gegenüber der elastischen Membran (14) an einer der Stelle des Rahmens (25) nächstmöglich gelegenen Stelle mündet, wo der Rand der elastischen Membran (14) zwischen der Filtrationsplatte (24) und dem Rahmen (25) jedes Filterelementes (5) festgehalten wird.

5. Filterpresse gemäß irgendeinem der Ansprüche 1 bis 4, welche eine untere Zufuhrleitung (6) aufweist, die mit der Filtrationskammer (13) jedes Filterelementes (5) durch eine entsprechende Flüssigkeitseinlaufleitung (17) verbunden ist, welche durch eine Einlaßöffnung (19) in die Filtrationskammer (13) mündet, dadurch gekennzeichnet, daß sie eine zweite obere Zufuhrleitung (9) aufweist, welche ebenfalls mit der Filtrationskammer (13) jedes Filterelementes (5) über eine Leitung verbunden ist, welche an einer Stelle angeordnet ist, die auf der entgegengesetzten Seite der von der unteren Zufuhrleitung (6) kommenden Einlaßleitung (17) liegt, wobei die obere Zufuhrleitung (9) mit der unteren Zufuhrleitung (6) derart verbunden ist, daß sie mit zu filtrierender Flüssigkeit stromabwärts von der unteren Zufuhrleitung (6) und im Gegenstrom zu der unteren Zufuhrleitung gespeist wird, wobei eine Leitung (10) die untere und obere Zufuhrleitung (6, 9), gegebenenfalls mit Zwischensetzung eines Ventils (11), miteinander verbindet.

6. Verfahren zur Filtration von Maischen, bei welchem ein Filter gemäß Anspruch 5 verwendet wird, dadurch gekennzeichnet, daß es die Schritte aufweist:
- an erster Stelle Einleiten der zu filtrierenden Flüssigkeit über die untere Zufuhrleitung (6) bis zur Füllung aller Filtrationskammern (13),
- gegebenenfalls Öffnung eines Ventils (11), welches die untere (6) und obere (9) Zufuhrleitung trennt, wenn alle Filtrationskammern (13) ausgehend von der unteren Zufuhrleitung (6) befüllt worden sind;
- Fortsetzung der Filtration, indem die Filtrationskammern (13) ebenfalls ausgehend von der oberen Zufuhrleitung (9) gespeist werden.
